# EUROPEAN PATENT SPECIFICATION

(11) **EP 1 601 521 B1**
(45) Date of publication and mention of the grant of the patent: **09.05.2007**
(21) Application number: 03715339.2
(22) Date of filing: 10.03.2003
(51) Int. Cl.: B29D 30/06

(54) **A METHOD AND AN APPARATUS FOR MANUFACTURING TYRES FOR VEHICLE WHEELS**
METHODE UND VORRICHTUNG ZUR HERSTELLUNG VON REIFEN FÜR FAHRZEUGRÄDER
PROCEDE ET APPAREIL PERMETTANT DE FABRIQUER DES PNEUS POUR DES ROUES DE VEHICULES

(43) Date of publication of application: 07.12.2005
(73) Proprietor: Pirelli Tyre S.p.A., 20126 Milano (IT)
(72) Inventor: MANCINI, Gianni, I-10141 Torino (IT)
(74) Representative: Tansini, Elio Fabrizio
(86) International application number: PCT/IT2003/000146
(87) International publication number: WO 2004/080701

(56) References cited:
- WO-A-01/32409
- DE-A- 3 242 241
- US-A- 5 853 526

## Description

The present invention relates to a method and an apparatus for manufacturing tyres for vehicle wheels.

In tyre vulcanisation use of a mould comprising a rigid toroidal support the shape of which matches that of the inner conformation of the tyre is known for example from document US 4,895,692. The toroidal support at the inside of the mould defines a predetermined volume within which the tyre must be moulded. Use of this type of mould leads to execution of a vulcanisation of the so-called "imposed-volume" type.

There are also moulding methods of the so-called "imposed-pressure" type in which pressing of the tyre against the inner walls of the mould is provided to be carried out by an expandable membrane inflated with steam under pressure within the tyre itself.

For example, DE 32 42 241 discloses a curing device with a preferably divided shell, moulding the outer surface of the tyre, and two plates which can be moved axially to each other to fix the edges of a bladder which is used to pressurise the inner surface of the pneumatic tyre. According to DE 32 42 241, in order to be able to change the influence of the plates on the inner surface of the tyre blank, the diameter of the plates can also be made changeable, e.g. by dividing them into radially movable segments. A design of this type also opens up the possibility of reducing the diameter of the plates if the vulcanised product is to be removed axially.

In patent applications WO 01/32409 and EP 876533 in the name of the same Applicant building of a tyre is provided through assembling of the individual components of same in a predetermined sequence on a rigid toroidal support the outer conformation of which is correlated with the configuration of the inner surface of the tyre to be obtained, although said support has slightly smaller sizes than those of the tyre. When assembling is over, the rigid toroidal support and the green tyre formed thereon are introduced into a mould to submit the tyre to a vulcanisation step during which a vulcanisation fluid under pressure is introduced between the outer surface of the toroidal support and inner surface of the tyre to carry out pressing of the tyre against the inner walls of the mould, while imposing some expansion to the tyre itself.

Document US 5,853,526 aims at making a tyre on a support of a conformation as much as possible close to that of the finished tyre as described in document US 4,895,692, and carrying out vulcanisation with a process of the imposed-pressure type, without however involving the necessity to transfer the green tyre from one toroidal support to another. For the purpose a process is proposed that involves formation of the green tyre through assembling of the tyre components using as the reference support, an inflatable bladder inflated to a predetermined pressure. For carrying out vulcanisation, the green tyre and inflatable bladder are closed in a mould, and the pressure in the bladder is brought to a moulding value sufficient to ensure moulding of the tyre. At the end of vulcanisation, the bladder is deflated to enable removal of the tyre.

The Applicant has however perceived that an inflatable bladder of the type required in a process as described in US document 5,853,526 must necessarily have a structural rigidity sufficient to ensure correct positioning of the tyre components during the assembling step. This structural rigidity can turn out to be of an excessive amount for a correct execution of the step of moulding and curing the tyre, in particular when a certain radial-expansion degree is wished to be imposed to the tyre in order to cause pressing of same against the inner walls of the mould. In accordance with the present invention, it has been found that for the purpose of ensuring a correct tyre moulding when an important radial expansion of same within the vulcanisation mould is required, it is convenient for the inner circumferential edges of the inflatable bladder to be such arranged as to enable a desired degree of movement of same in a radial and circumferential direction, in order to help the radial expansion of the inflatable bladder and of the tyre built thereon.

In more detail, it is an aim of the present invention to provide a method of manufacturing tyres for vehicle wheels contemplating use of a building drum having an inflatable bladder with coaxially spaced apart circumferential edges and comprising the steps of: setting the inflatable bladder in an inflated condition so that the shape of an outer surface thereof is in correlation with the shape of an inner surface of a green tyre to be built; applying a plurality of elementary components onto the building support so as to build said green tyre; introducing the green tyre and building support into a vulcanisation mould; curing the green tyre, wherein during vulcanisation a step of over-inflating the inflatable bladder is carried out during which the circumferential edges of the inflatable bladder are submitted to a radially outward movement.

It is a further aim of the invention to provide an apparatus for building tyres for vehicle wheels starting from a plurality of elementary components, comprising: a building support including an inflatable bladder of substantially toroidal shape having circumferential edges.coaxially spaced apart from each other; inflating devices associated with the inflatable bladder to bring the bladder to an inflated conditions so that the shape of an outer surface thereof is in correlation with the shape of an inner surface of a green tyre to be built; said building support comprising axially opposite anchoring flanges engaging the circumferential edges of the inflatable bladder, further comprising radially sliding members associated with said anchoring flanges and engaging the circumferential edges of the inflatable bladder to allow a radial movement of the circumferential edges of the inflatable bladder.

The invention further proposes a plant for manufacturing tyres for vehicle wheels comprising : a building apparatus having a building support comprising an inflatable bladder of substantially toroidal shape with circumferential edges coaxially spaced apart from each other; inflating devices associated with the inflatable bladder to bring the bladder to an inflated condition so that the shape of an outer surface thereof is in correlation with the shape of an inner surface of a green tyre to be built; devices for applying a plurality of elementary components of said green tyre onto the building support; at least one mould for vulcanisation of the green tyre; devices for transferring of the building support into the vulcanisation mould; wherein the circumferential edges of the inflatable bladder are radially movable in order to promote an additional radial expansion of the inflatable bladder imposed by said inflating devices starting from the inflated condition.

Further features and advantages will become more apparent from the detailed description of a preferred but not exclusive embodiment of a method of manufacturing tyres for vehicle wheels, and a plant provided with a building apparatus adapted to put said method into practice. This description will be set out hereinafter with reference to the accompanying drawings, given by way of non-limiting example, in which:

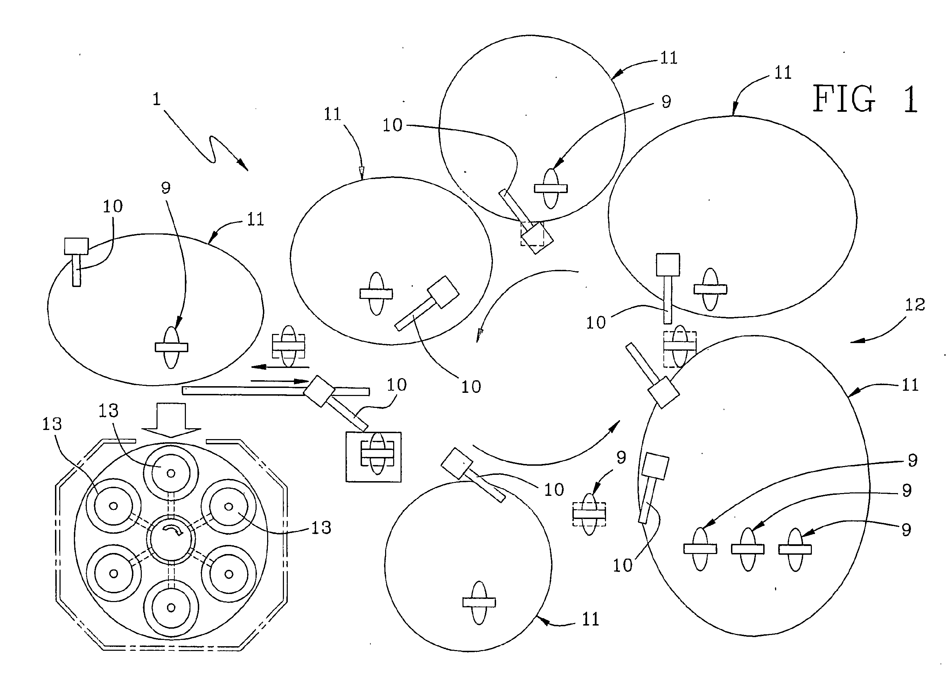

- Fig. 1 is a diagrammatic plan view of a plant for manufacturing tyres comprising a building apparatus in accordance with the present invention;

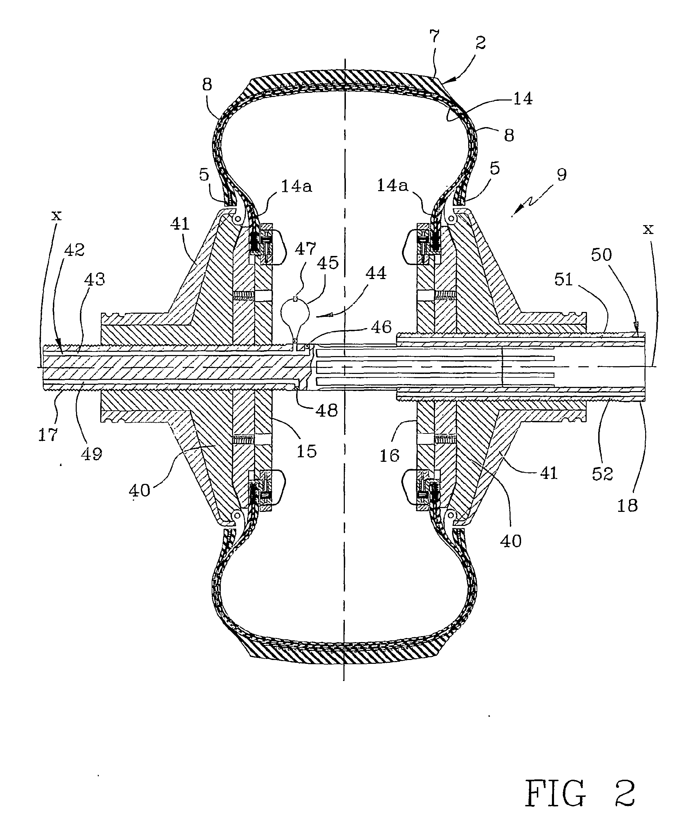

- Fig. 2 diagrammatically shows, in diametrical cross-section, a building support being part of the apparatus in question, with an inflatable bladder thereof in an inflated condition;

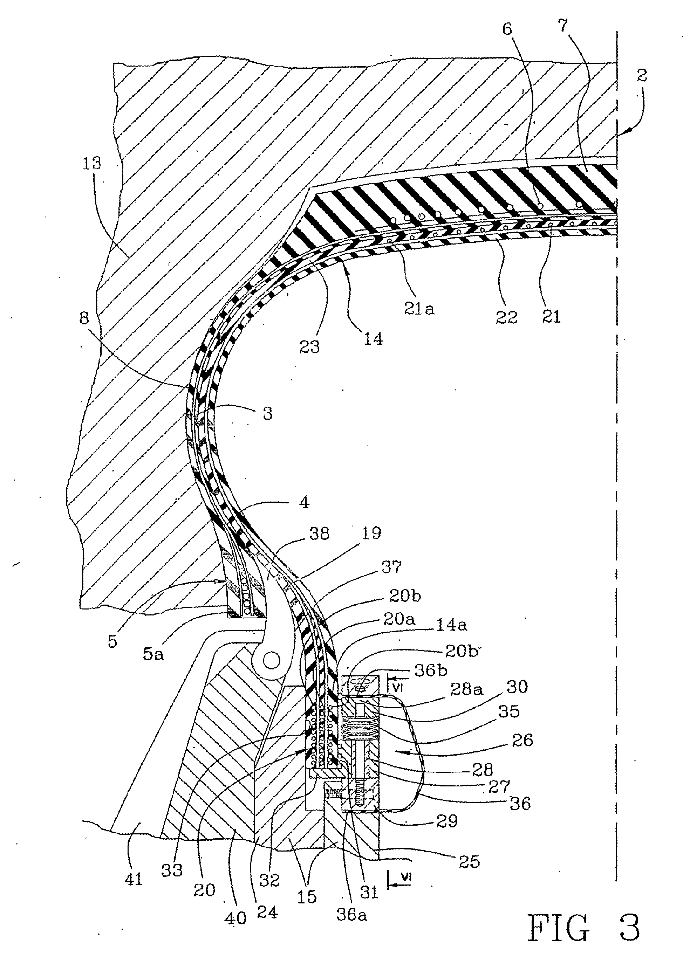

- Fig. 3 shows a detail to an enlarged scale of the building support in Fig. 2 with the inflatable bladder in an inflated condition within a vulcanisation mould;

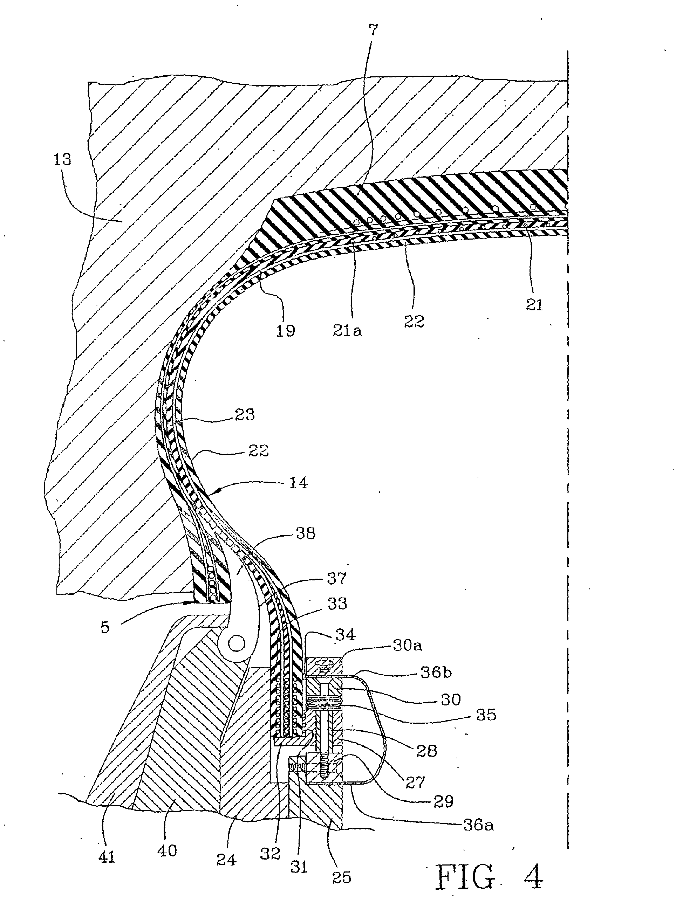

- Fig. 4 shows a detail of Fig. 3 with the inflatable bladder in an over-inflated condition;

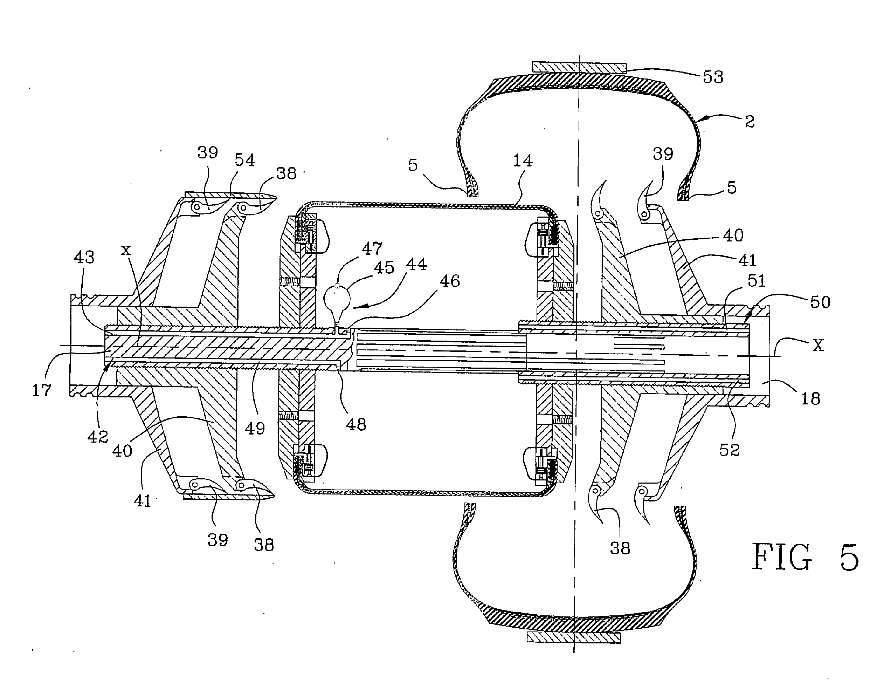

- Fig. 5 shows the building support during removal of the finished tyre;

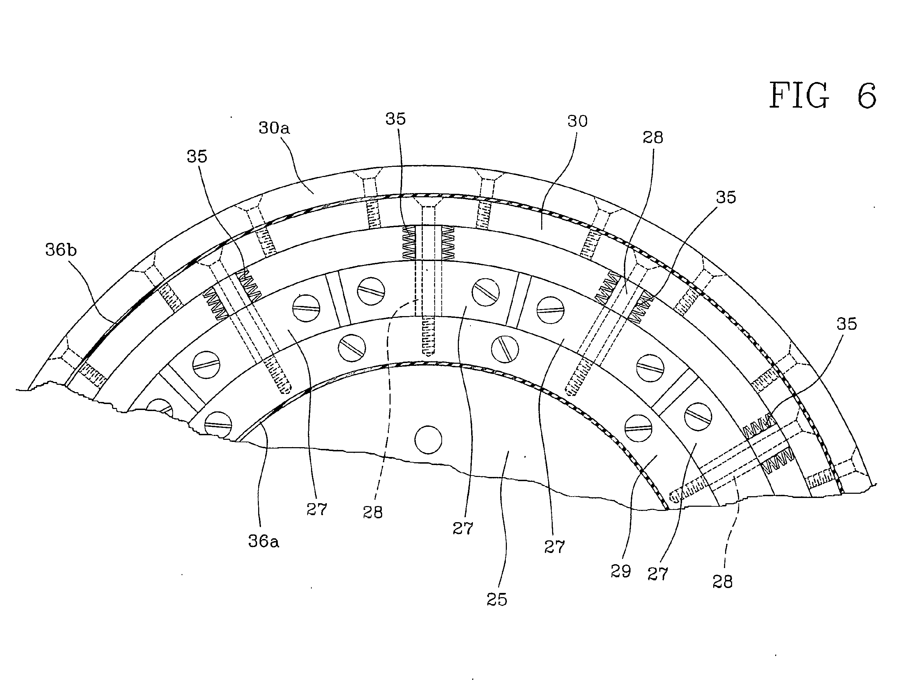

- Fig. 6 partly shows one of the anchoring flanges of the building drum, sectioned along line VI-VI in Fig. 3.

With reference to the drawings, a plant for manufacturing tyres for vehicle wheels provided with a building apparatus in accordance with the present invention has been generally identified by reference numeral 1.

Plant 1 is designed to make tyres 2 essentially comprising at least one carcass ply 2 internally coated with one layer of air-tight elastomer material, a so-called liner 4, two annular anchoring structures 5a in engagement with the circumferential edges of the carcass ply close to the regions usually identified as "beads" 5, a belt structure 6 circumferentially applied around the carcass ply 3, a tread band 7 circumferentially superposed on the belt structure 6, and two sidewalls 8 applied to the carcass ply 3 at laterally opposite positions and each extending from the corresponding bead 5 to the corresponding side edge of the tread band 7.

Building of tyres 2 is carried out with the aid of an apparatus comprising one or more building supports 9 each of which, through one or more robotized arms 10 or other transfer devices, is sequentially brought to interact with one or more building stations 11 distributed along a building line 12 to cause assembling of components 3, 4, 5, 6, 7, 8 of the respective tyre 2 in a predetermined sequence. In a preferential embodiment, each component 3, 4, 5, 6, 7, 8 of the tyre is directly formed by directly applying one or more elementary components, such as strips or bands of elastomer material, metallic or rubberised textile cords, narrow bands of rubberised cords or others, onto the building support 9, as described in document US 6,318,432 in the name of the same Applicant, for example.

When assembling has been completed the building support 9 and green tyre 2 built thereon, still with the aid of a robotized arm 10 or other suitable transfer device, are transferred to a mould 13 to cause vulcanisation of tyre 2.

The building support 9 essentially comprises an inflatable bladder 14 having circumferential edges 14a axially spaced apart from each other and in engagement with a first and a second anchoring flanges 15, 16, respectively. The first and second anchoring flanges 15, 16 are in engagement with a first and a second shaft 17, 18 respectively, that are telescopically joined together. For the purpose, the first shaft 17 is for example provided to be coaxially insertable into the second shaft 18 which is internally hollow. A locking member not shown, comprising a mechanical hooking for example, to be operated mechanically, electromagnetically, pneumatically or in other manner, ensures a steady axial locking between the first and second shafts 17, 18 while keeping the possibility of disengaging them from one another, for the purposes better clarified in the following.

It may be advantageously provided that at least one of the anchoring flanges 15, 16 should be secured to the respective shaft 17, 18 by screwing, so that it can be axially positioned along the latter to adjust the distance between the anchoring flanges themselves depending on the geometrical features of the tyre 2 to be obtained.

The inflatable bladder 14 has a radial reinforcing structure .19 made up of textile or metallic cords disposed in radial planes with respect to a geometric rotation axis X-X and each extending between the opposite circumferential edges 14a of the inflatable bladder itself. Close to each circumferential edge 14a an annular anchoring structure 20 is formed that comprises annular inserts 20a, 20b each consisting of one or more textile or metallic cords wound up into radially superposed coils. In the example shown, integrated into each circumferential edge 14a of the inflatable bladder 14 there is a central annular insert 20a interposed between two series of cords belonging to the radial reinforcing structure 19 and overlapping each other in an alternate sequence on the axially inner side and the axially outer side respectively of the central insert itself. Also provided are two side inserts 20b, placed in an axially internal position and an axially external position respectively relative to the cords of the radial reinforcing structure 19.

Associated with the radial reinforcing structure 19 is a belting structure 21 comprising one or more textile or metallic cords circumferentially wound up into coils disposed in side by side relationship externally of the radial reinforcing structure 19, in a region delimited between two axially opposite edges 21a of the belting structure itself, suitably spaced apart from the circumferential edges 14a of the inflatable bladder 14.

In a preferential embodiment, the radial reinforcing structure 19 consists of metallic cords distributed according to a density included between 50 and 180 cords/dm and each comprising two to five filaments of steel with a diameter included between 0.06 mm and 0.2 mm. Each cord has a tensile strength included between 45 and 165 Newton, with an extendibility of 0.5% for a load included between 1/3 and 1/5 of the tensile strength.

Each annular reinforcing insert 20a, 20b can be in turn formed of a cord comprising 2 to 12 metal filaments of a diameter included between 0.2 mm and 0.45 mm. The tensile strength of the cord is preferably included between 550 and 1850 Newton, with an elongation corresponding to 0.5% for a load included between 1/6 and 1/7 of the tensile strength.

The belting structure 21 can consist of one or more cords comprising 2 to 5 metal filaments of a diameter included between 0.08 mm and 0.3 mm. The cord or cords may form coils disposed in accordance with a density of 50 to 135 cords/dm. Each cord preferably has a tensile strength included between 250. and 550 Newton, with elongation of 0.5% for a load included between 1/7 and 1/8 of the tensile strength.

The reinforcing inserts can be integrated, together with the ends of the cords forming the radial reinforcing structure, into high-modulus elastomer fillers of a hardness just as an indication in the order of 70° and 92° Shore A, arranged close to the end edges 14a of the inflatable bladder 14.

The inflatable bladder 14 is also provided to be coated, on its inner surface, with a layer of a highly impervious elastomer material 22, a butyl-based blend for example. The outer surface of the inflatable bladder 14 on the contrary is preferably coated with a layer of a non-sticking material 23, a silicone-based blend for example.

The anchoring flanges 16, 17 each comprise an axially external half-flange 24 and an axially internal half-flange 25 incorporating radially sliding members 26 engaging the corresponding circumferential edge 14a of the inflatable bladder 14 in such a manner that the circumferential edge itself is movable in a radial direction.

In more detail, the radially sliding members 26 contemplate arrangement of a plurality of blocks 27 circumferentially distributed close to the perimetric edge of at least one of the half-flanges 24, 25, in this embodiment the axially inner half-flange 25. Each block 27 is slidably guided in a radial direction along at least one guide column 28 extending through the block itself and rigidly engaged between a first annulus 29 and a second annulus 30 that are concentric and fastened to the axially inner half-flange 25, by screws 28a longitudinally passing through the guide columns 28 associated with the different blocks 27a, for example.

Each block 27 has a grip surface 31 acting in thrust relationship against the surface of the inflatable bladder 14 close to the inner circumferential edge 14a thereof, and an abutment lug 32 projecting in an axial direction to supply a further support seat for said inner circumferential edge.

The grip surface 31 is preferably provided with ribs extending substantially circonferentially to efficiently retain the inflatable bladder 14 and thus prevent radial slipping off of same with respect to block 27.

The circumferentially distributed blocks 27 act in thrust relationship against the circumferential edge 14a of the inflatable bladder 14, in contrast relationship with a radial abutment surface 33 formed in the axially external half-flange 24. In other words, each of the circumferential edges 14a of the inflatable bladder 14 is enclosed between the blocks 27 carried by the axially internal half-flange 25 and the radial abutment surface 33 formed on the axially external half-flange 24.

The first and second anchoring flanges 15, '16 are each provided to be associated with at least one circumferential seal 34 set to act against the inflatable bladder 14 to hermetically insulate the inner portion thereof from the surrounding atmosphere. This circumferential seal can be placed for example close to the second annulus 30, at a radially external position with respect to the first annulus 29, and possibly extending towards the geometric axis X-X, to act in sliding contact relationship against the inner surface of the inflatable bladder 14. The outer surface of the inflatable bladder 14 may be also provided to be slidably in sealing engagement against the radial abutment surface 33 formed on the axially external half-flange 24, after possible interposition of a second circumferential seal (not shown). The radial abutment surface 33 can be coated with a layer of antifriction material, Teflon® for example.

Elastic return members 35 consisting of Belleville washers fitted on columns 28 for example, constantly urge each block 27 towards the geometric axis X-X of the inflatable bladder 14.

Each anchoring flange 15, 16 may be also associated with an annular membrane 36 having a radially internal circumferential edge. 36a and a radially external circumferential edge 36b sealingly fastened to the anchoring flange itself, at a radially external position and at a radially internal position respectively with respect to the radially sliding members 26. In particular, the radially internal edge 36a of the annular membrane 36 can be sealingly enclosed between the axially internal half-flange 25 and the first annulus 29, whereas the radially external edge 36b can be enclosed between the second annulus 30 and a third annulus 30a fastened to the second annulus 30. Said circumferential seal 34 can be formed on the end of the radially external edge 36b of the annular membrane 36.

Associated with each of the anchoring flanges 15, 16 is an annular abutment flange 37 to be positioned against an outer side surface of the inflatable bladder 14 to supply a support seat to the inner surface of tyre 2 close to a corresponding bead 5 of the latter. Each of these annular abutment flanges 37 is divided into a plurality of circumferential sectors 38, 39 each of them being movable between an operating position at which it has a substantially radial orientation with respect to the geometric axis X-X of the inflatable bladder 14 and a rest position at which it is radially retracted to enable disengagement of tyre 2 from the building support 9.

In more detail, first circumferential sectors 38 and second circumferential sectors 39 are provided which are consecutively distributed in an alternate sequence and respectively engaged with a first hub 40 and a second hub 40 axially movable with respect to each other and adapted to be positioned in side by side relationship with the respective anchoring flange 15, 16. The first hub 40 of each anchoring flange 15, 16 is preferably engaged by screwing on the first shaft 17 or on the second shaft 18 respectively, so that, when it comes in abutment against the respective anchoring flange 15, 16, it causes rotational locking of said flange with respect to the corresponding shaft 17, 18.

The second hub 41 can be axially moved close to the first hub 40 so that it lends itself to cause interposition of the second circumferential sectors 39 between the first circumferential sectors 38 carried by the first hub 40, in a surface continuity relationship therewith.

Torsion springs or other appropriate spring members operate between each circumferential sector 38, 39 and the corresponding hub 40, 41 to keep the circumferential sectors themselves to the operating position.

Also associated with the inflatable bladder 14 are inflating devices 42 to admit fluid under pressure thereto and bring said bladder to such an inflated condition that it acquires a substantially toroidal shape, with an outer surface conforming in shape to the inner conformation of the green tyre 2 to be built. These inflating devices may comprise an admission duct 43 for example for introduction of air or other fluid under pressure, which duct is longitudinally formed through the first shaft 17 and can be connected to a supply source arranged along the building line .12 to feed said pressurised gas. More particularly, the admission duct 43 of the first shaft 17 is preferably connected to said supply source during a starting step of the tyre working cycle, to set the inflatable bladder 14 to the inflated condition.

Preferably, during admission of the pressurised fluid to the inflatable bladder 14 a control of the geometric configuration of the bladder itself is carried out, so as to actuate stopping of fluid admission when bladder 14 has reached a predetermined size. In more detail, for the purpose, members (not shown in the drawings) for detecting the geometric configuration of the inflatable bladder may be provided, which members may comprise one or more photoemitters for example that operate at different points of the extension outline of bladder 14, each of them generating a light beam to be intercepted by the inflatable bladder itself on reaching of the inflated condition. Combined with the photoemitters are respective photoreceivers set to receive the respective light beams, directly coming from the photoemitters or reflected by the surface of the inflatable bladder 14, to operate stopping of fluid admission as soon as the photoemitter's light beam is intercepted by the outer surface of the inflatable bladder. It is to be noted that with use of laser beam photoemitters a very accurate control of the geometric configuration of the inflatable bladder 14 can be obtained, even with tolerances lower than 0.1 mm.

When the inflatable bladder 14 has reached its inflated condition, it is inflated to a pressure of a value, just as an indication, lower than 5 bars. Due to stiffness of the Belleville washers 35, blocks 27 can be kept in a radially retracted position when the bladder is in an inflated condition.

Once the inflated condition of the inflatable bladder 14 has been reached, the building support 9 is ready to receive the different components of tyre 2 to be made that are assembled on said support in the different work steps along the building line 12. Assembling of the tyre components can start with formation of the air-tight liner 4 through winding of a continuous strip of raw elastomer material into coils disposed consecutively in side by side relationship starting from one of the annular abutment flanges 37, in the region corresponding to one of the tyre beads, to cover the outer surface of the inflatable bladder 14 until reaching the annular abutment flange 37 placed on the opposite side of the bladder itself.

Formation of liner 4 is followed by assembling of all the other components 3, 5a, 6, 7, 8 of tyre 2 in a predetermined sequence, as described in document US 6,318,432 in the name of the same Applicant, for example.

Advantageously, during assembling of the different components of tyre 2 along the building line 12, carrying out of a control of the inner pressure of the inflatable bladder 2 may be provided in a continuous manner or at predetermined intervals. In fact the Applicant has found that this inner pressure can be submitted to important variations following temperature rising or lowering taking place during working for example, which will adversely affect the geometric conformation of the inflatable bladder 14 being inflated. For the purpose devices 44 for control and maintenance of the inflating pressure in the inflatable bladder 14 are provided, which devices preferably comprise a pneumatic tank 45 (diagrammatically shown) associated with the first shaft 17 for example and connected to the admission duct 43 so that it can be loaded with pressurised fluid simultaneously with inflation of bladder 14. Combined with the pneumatic tank 45 are control members consisting of a manometric sensor 46 for example, connected with a shutoff valve 47 arranged on the tank itself to control admission of pressurised fluid to the inflatable bladder 14 if the inner bladder pressure goes below a predetermined value. The manometric sensor 46 may also control opening of an exhaust valve 48 associated with an outflow duct 49 of the pressurised gas from the inflatable bladder 14, to cause evacuation of the pressurised gas if the inner pressure in bladder 14 overcomes a predetermined threshold during building of tyre 2.

When tyre building has been completed, the building support 9 with the green tyre 2 formed thereon is transferred into the vulcanisation mould 13 wherein activation of over-inflating devices 50 is driven, upon the action of which an additional expansion of the inflatable bladder 14 is determined starting from the inflated condition. These over-inflating devices 50 can coincide with or be an integral part of the above described inflating devices 42 and may for example comprise an admission channel 51 and an evacuation channel 52 for a pressurised fluid, which are arranged lengthwise in the second shaft 18 and can be connected with a steam-feeding circuit or a circuit for feeding another vulcanisation fluid, usually associated with mould 13.

Therefore through the admission 51 and evacuation 52 channels, steam circulation to pressure values even exceeding 20 bars is allowed within the building support 9, said values being much higher than those required to bring and keep bladder 14 to the inflated condition in the preceding tyre building steps.

Therefore, the high pressure of the steam admitted to the inflatable bladder 14 causes over-inflation and further expansion of the bladder itself, so that compression of tyre 2 against the inner walls of mould 13 is ensured.

Due to the structure of the anchoring flanges 15, 16, the inner circumferential edges 14a of the inflatable bladder 14 are given some mobility in a radial direction. Consequently, the circumferential edges 14a of the inflatable bladder 14 are free to move in a radial and circumferential direction, dragging along blocks 27 with them, which blocks radially translate away from axis X-X and compress the Belleville washers 35 to help expansion of the bladder during over-inflation. Preferably, for reaching the over-inflated condition the inner circumferential edges are submitted to a circumferentially extending expansion at least of 2%.

When vulcanisation has been completed, ejection of the pressurised steam from the inside of the inflatable bladder 14 takes place through the evacuation channel 52 and, following pressure reduction, the Belleville washers 35 bring blocks 27 back to the first operating condition, causing separation of the inflatable bladder 14 from the inner surfaces of tyre 2.

The building support 9 with the finished tyre 2 thereon is extracted from mould 13 and they are subsequently separated from one another. For the purpose, the first and second shafts 17, 18 are mutually disengaged and, while tyre 2 is externally held by a handling device 53, a mutual approaching of the anchoring flanges 15, 16 can be carried out to cause separation of the tyre beads 5 from the circumferential abutment flanges 37. Subsequently axial moving apart of the second hubs 41 from the first hubs 40 is determined so that the second circumferential sectors 39 are free to take their rest orientation without mechanically interfering with the first circumferential sectors 38. During this axial-movement step the second circumferential sectors 39 carried by at least one of the second hubs 41, the hub associated with the first shaft 17 for example, are forced to move to the inside of the corresponding bead 5 of tyre 2, simultaneously with their dropping to the rest condition.

Subsequently, the anchoring flanges 15, 16 are operated so that they are axially separated from each other, causing the first circumferential sectors 38 of at least one of the first hubs 40, the hub associated with the first shaft 17 for example, to move to the inside of the tyre bead. Tyre 2, through the handling device 53, lends itself to be axially slipped off from one of the anchoring flanges 15, 16, the flange 15 associated with the first shaft 17 for example, as well as from the respective hubs 40, 41. A holding ring 54 may be advantageously fitted on the axially spaced apart hubs 40, 41 associated with the first shaft 17 to keep the circumferential sectors 38, 39 in the rest position.

The invention achieves important advantages, particularly in terms of improvement of the conditions adopted for carrying out moulding of tyre 2 and, consequently, of the quality of the finished product. Due to mobility of the inner circumferential edges 14a of bladder 14 in a radial direction, an excellent expansion of the bladder itself in the over-inflated condition is ensured as well as, as a result, an improved evenness in pressing tyre 2 against the walls of mould 13.

The construction features of the inflatable bladder 14 too, and in particular the extendibility of the circumferential edges 14a thereof in a circumferential direction, helps in obtaining the above advantages.

Due to mobility of the circumferential edges 14a, the stresses to which the inflatable bladder 14 on the whole is submitted during the over-inflating step are greatly reduced. Thus a longer duration of the inflatable bladder 14 is ensured and service interventions on the building support 9 are reduced.

It will be also recognised that the inflation control through control of the geometric configuration of bladder 14 offers an improved surveillance on the geometric uniformity of the obtained product. This improvement is also enhanced through control and maintenance of the inner pressure of the bladder at the end of the inflating operation, during execution of the whole process for building tyre 2.

Furthermore, the possibility of axially positioning the anchoring flanges 15, 16 along the respective first and second shafts 17, 18 enables the building support 9 to be adjusted for production of tyres of different sizes.

## Claims

1. A method of manufacturing tyres for vehicle wheels comprising use of a building support (9) having an inflatable bladder (14) with circumferential edges (14a) coaxially spaced apart and comprising the steps of:
- setting the inflatable bladder (14) in an inflated condition so that the shape of an outer surface thereof is in correlation with the shape of the inner surface of a green tyre (2) to be built;
- applying a plurality of elementary components onto the building support (9) in order to build said green tyre (2);
- introducing the green tyre (2) and the building support (9) into a vulcanisation mould (13);
- curing the green tyre (2),
wherein during vulcanisation a step of over-inflating the inflatable bladder (14) is carried out during which the circumferential edges (14a) of the inflatable bladder (14) are submitted to a radially outward movement.

2. A method as claimed in claim 1, wherein during transition between the inflated condition and the over-inflated condition each circumferential edge (14a) of the inflatable bladder (14) is slidably and sealingly guided in an anchoring flange (15, 16) associated with said building support (9).

3. A method as claimed in claim 1, wherein the inflating step is carried out by admission of a pressurised fluid to the inflatable bladder (14), said method further comprising the step of controlling the geometric configuration of the inflatable bladder (14).

4. A method as claimed in claim 3, wherein control of the geometric configuration of the inflatable bladder (14) is carried out by detecting interception of at least one light beam by the inflatable bladder (14) when the latter reaches its inflated condition.

5. A method as claimed in claim 1, wherein during the step of assembling the components of the tyre (2) on the building support (9) at least control of the inflating pressure of the inflatable bladder (14) is carried out.

6. A method as claimed in claim 1, wherein in the over-inflating step the circumferential edges (14a) of the inflatable bladder (14) are submitted to an elastic elongation in a circumferential direction of at least 2%.

7. A method as claimed in claim 1, further comprising a step of deflating the inflatable bladder (14) to enable disengagement of the building support (9) from the vulcanised tyre.

8. A method as claimed in claim 1, further comprising the step of disposing a pair of annular abutment flanges (37) laterally close to the inflatable bladder (14), said flanges defining support seats for the respective beads (5) of the tyre (2) being worked.

9. A method as claimed in claim 1, wherein the over-inflating step is carried out by introducing a vulcanisation fluid at high pressure and temperature into the inflatable bladder (14).

10. An apparatus for building tyres for vehicle wheels starting from a plurality of elementary components, comprising:
- a building support (9) including an inflatable bladder (14) having circumferential edges (14a) coaxially spaced apart from each other;
- inflating devices (42, 50) associated with the inflatable bladder (14) to bring the bladder to an inflated condition so that it has a substantially toroidal conformation, the shape of an outer surface thereof being in correlation with the shape of an inner surface of a green tyre (2) to be built;
- said building support (9) comprising axially opposite anchoring flanges (15, 16) engaging the circumferential edges (14a) of the inflatable bladder (14),
further comprising radially sliding members (26) associated with said anchoring flanges (15, 16) and engaging the circumferential edges (14a) of the inflatable bladder (14) to allow a radial movement of the circumferential edges (14a) of the inflatable bladder (14).

11. An apparatus as claimed in claim 10, further comprising over-inflating devices (50) for the inflatable bladder (14), to be activated to impose an additional radial expansion to the inflatable bladder (14) starting from the inflated condition.

12. An apparatus as claimed in claim 10, wherein the radially sliding members (26) comprise, for each anchoring flange (15, 16), a plurality of blocks (27) that are circumferentially distributed and slidably guided in a substantially radial direction on the anchoring flange (15, 16) and that rigidly engage the corresponding circumferential edge (14a) of the inflatable bladder (14).

13. An apparatus as claimed in claim 12, wherein each circumferential edge (14a) of the inflatable bladder (14) is enclosed between said blocks (27) and a radial abutment surface (33) defined in the anchoring flange (15, 16).

14. An apparatus as claimed in claim 12, wherein the inflatable bladder (14) is slidably and sealingly engaged against the radial abutment surface (33).

15. An apparatus as claimed in claim 12, further comprising elastic return members (35) operating on the blocks (27) to urge them towards a geometric axis (X-X) of the inflatable bladder (14).

16. An apparatus as claimed in claim 10, wherein at least one circumferential seal is associated with each anchoring flange (15, 16), which seal acts against the inflatable bladder (14) in a radially external position relative to the radially sliding members (26).

17. An apparatus as claimed in claim 10, wherein at least one annular membrane (36) is associated with each anchoring flange (15, 16), said membrane having a radially internal circumferential edge (36a) sealingly fastened to the anchoring flange (11, 16) at a radially internal position relative to the radially sliding members (26), and a radially external circumferential edge (36b) sealingly fastened to the anchoring flange (15, 16) at a radially external position relative to the radially sliding members (26).

18. An apparatus as claimed in claim 10, wherein the anchoring flanges (15, 16) are fastened to a first shaft (17) and a second shaft (18) respectively, said shafts being telescopically slidable into one another.

19. An apparatus as claimed in claim 18, wherein the inflating devices (42, 50) comprise at least one pneumatic admission duct (43) formed in at least one of said first shaft (17) and second shaft (18).

20. An apparatus as claimed in claim 10, further comprising devices (44) for control and maintenance of the inflating pressure of the inflatable bladder (14) during assembling of the components of the tyre (2) on the building support (9).

21. An apparatus as claimed in claim 20, wherein said devices for control and maintenance of the inflating pressure (44) comprise a pneumatic tank (45) associated with the building support (9), and control members (47, 48) interconnected with said tank (45) to keep the inflating pressure of the inflatable bladder (14) controlled to the inflated condition.

22. An apparatus as claimed in claim 11, wherein the circumferential edges (14a) of the inflatable bladder (14) exhibit, under an over-inflated condition, an elastic circumferential elongation of at least 2%.

23. An apparatus as claimed in claim 10, further comprising two annular flanges (37) to be disposed at opposite positions respectively, against outer side surfaces of the inflatable bladder (14) and each defining a rigid abutment surface for formation of a bead (5) of the tyre (2) being worked.

24. An apparatus as claimed in claim 23, wherein each annular flange (37) comprises circumferential sectors (38, 39) movable between an operating position at which they have a substantially radial orientation relative to a geometric axis (X-X) of the inflatable bladder (14), and a rest position at which they are radially retracted to enable disengagement of the tyre (2) from the building support (9).

25. An apparatus as claimed in claim 24, wherein each annular flange (37) comprises first sectors (38) and second sectors (39) that are circumferentially distributed in an alternate sequence and in engagement with a first hub (40) and a second hub (41) respectively, said hubs being axially movable with respect to one another.

26. An apparatus as claimed in claim 10, wherein members detecting the geometric configuration of the inflatable bladder (14) are associated with said inflating devices (42) for stopping admission of pressurised fluid when the inflatable bladder (14) has reached predetermined sizes.

27. An apparatus as claimed in claim 26, wherein said detecting members comprise at least one photoemitter generating a light beam to be intercepted by the inflatable bladder (14) under an inflated condition and a photoreceiver set to receive the light beam.

28. A plant for manufacturing tyres for vehicle wheels comprising:
- a building apparatus having a building support (9) comprising an inflatable bladder (14) with circumferential edges (14a) coaxially spaced apart from each other;
- inflating devices (42, 50) associated with the inflatable bladder (14) to bring the bladder to an inflated condition so that it has a substantially toroidal conformation and the shape of an outer surface thereof is in correlation with the shape of an inner surface of a green tyre (2) to be built;
- devices (10, 11, 12) for applying a plurality of elementary components of said green tyre (2) onto the building support (9);
- at least one mould (13) for vulcanisation of the green tyre (2);
- devices (10) for transferring of the building support (9) into the vulcanisation mould (13);
wherein the circumferential edges (14a) of the inflatable bladder (14) are radially movable in order to promote an additional radial expansion of the inflatable bladder (14) imposed by said inflating devices (42, 50) starting from the inflated condition.

## Patentansprüche

1. Verfahren zur Herstellung von Reifen für Fahrzeugräder, bei welchem ein Aufbauträger (9) verwendet wird, der einen aufblasbaren Heizbalg (14) mit Umfangsrändern (14a) aufweist, die koaxial beabstandet sind, wobei das Verfahren die Schritte aufweist:
- Versetzen des aufblasbaren Heizbalgs (14) in einen aufgeblasenen Zustand, so dass die Form seiner Außenfläche in Korrelation zu der Form der Innenfläche eines zu bauenden Rohreifens (2) steht,
- Aufbringen einer Vielzahl von Elementarbauelementen auf den Aufbauträger (9) zum Aufbau des Rohreifens (2),
- Einführen des Rohreifens (2) und des Aufbauträgers (9) in eine Vulkanisierform (13) und
- Vulkanisieren des Rohreifens (2),
- wobei während der Vulkanisierung ein Schritt des Über-Aufblasens des aufblasbaren Heizbalgs (14) ausgeführt wird, während dem die Umfangsränder (14a) des aufblasbaren Heizbalgs (14) einer Bewegung radial nach außen unterworfen werden.

2. Verfahren nach Anspruch 1, bei welchem während des Übergangs zwischen dem aufgeblasenen Zustand und dem über-aufgeblasenen Zustand jeder Umfangsrand (14a) des aufblasbaren Heizbalgs (14) gleitend und abdichtend in einem Verankerungsflansch (15, 16) geführt wird, der mit dem Aufbauträger (9) verbunden ist.

3. Verfahren nach Anspruch 1, bei welchem der Aufblasschritt **dadurch** ausgeführt wird, dass dem aufblasbaren Heizbalg (14) ein Druckfluid zugeführt wird, wobei das Verfahren weiterhin den Schritt aufweist, die geometrische Gestalt des aufblasbaren Heizbalgs (14) zu steuern.

4. Verfahren nach Anspruch 3, bei welchem die Steuerung der geometrischen Gestalt des aufblasbaren Heizbalgs (14) **dadurch** ausgeführt wird, dass die Unterbrechung wenigstens eines Lichtstrahls durch den aufblasbaren Heizbalg (14) erfasst wird, wenn letzterer seinen aufgeblasenen Zustand erreicht.

5. Verfahren nach Anspruch 1, bei welchem während des Schritts des Zusammenfügens der Bauelemente des Reifens (2) auf dem Aufbauträger (9) wenigstens eine Steuerung des Aufblasdrucks des aufblasbaren Heizbalgs (14) ausgeführt wird.

6. Verfahren nach Anspruch 1, bei welchem bei dem Schritt des Über-Aufblasens die Umfangsränder (14a) des aufblasbaren Heizbalgs (14) einer elastischen Dehnung in einer Umfangsrichtung von wenigstens 2% unterworfen werden.

7. Verfahren nach Anspruch 1, welches weiterhin einen Schritt des Entleerens des aufblasbaren Heizbalgs (14) aufweist, damit der Eingriff des Aufbauträgers (9) von dem vulkanisierten Reifen gelöst werden kann.

8. Verfahren nach Anspruch 1, welches weiterhin den Schritt aufweist, ein Paar von ringförmigen Anschlagflanschen (37) seitlich nahe an dem aufblasbaren Heizbalg (14) anzuordnen, wobei die Flansche Haltesitze für die jeweiligen Wulste (5) des in Herstellung befindlichen Reifens (2) bilden.

9. Verfahren nach Anspruch 1, bei welchem der Schritt des Über-Aufblasens **dadurch** ausgeführt wird, dass ein Vulkanisierfluid mit hohem Druck und hoher Temperatur in den aufblasbaren Heizbalg (14) eingeführt wird.

10. Vorrichtung zum Herstellen von Reifen für Fahrzeugräder ausgehend von einer Vielzahl von Elementarbauelementen, wobei die Vorrichtung
- einen Aufbauträger (9) mit einem aufblasbaren Heizbalg (14), der Umfangsränder (14a) hat, die koaxial voneinander beabstandet sind,
- Aufblasvorrichtungen (42, 50), die mit dem aufblasbaren Heizbalg (14) verbunden sind, um den Heizbalg in einen aufgeblasenen Zustand zu bringen, so dass er im Wesentlichen eine Torusform hat, wobei die Form seiner Außenfläche in Korrelation zu der Form einer Innenfläche eines herzustellenden Rohreifens (2) steht,
- wobei der Aufbauträger (9) axial gegenüberliegende Verankerungsflansche (15, 16) aufweist, die an den Umfangsrändern (14a) des aufblasbaren Heizbalgs (14) angreifen und
- weiterhin sich radial verschiebende Elemente (26) aufweist, die mit den Verankerungsflanschen (15, 16) verbunden sind und an den Umfangsrändern (14a) des aufblasbaren Heizbalgs (14) angreifen, um eine Radialbewegung der Umfangsränder (15a) des aufblasbaren Heizbalgs (14) zu ermöglichen.

11. Vorrichtung nach Anspruch 10, welche weiterhin Über-Aufblasvorrichtungen (50) für den aufblasbaren Heizbalg (14) aufweist, die so aktiviert werden, dass sie eine zusätzliche radiale Ausdehnung auf den aufblasbaren Heizbalg (14) ausgehend von dem aufgeblasenen Zustand ausüben.

12. Vorrichtung nach Anspruch 10, bei welcher die sich radial verschiebenden Elemente (26) für jeden Verankerungsflansch (15, 16) eine Vielzahl von Blöcken (27) aufweisen, die am Umfang verteilt und gleitend verschiebbar in einer im Wesentlichen radialen Richtung an dem Verankerungsflansch (15, 16) geführt werden und die starr an dem entsprechenden Umfangsrand (14a) des aufblasbaren Heizbalgs (14) angreifen.

13. Vorrichtung nach Anspruch 12, bei welcher jeder Umfangsrand (14a) des aufblasbaren Heizbalgs (14) zwischen den Blöcken (27) und einer radialen Anschlagfläche (33) eingeschlossen ist, die in dem Verankerungsflansch (15, 16) gebildet wird.

14. Vorrichtung nach Anspruch 12, bei welcher der aufblasbare Heizbalg (14) gleitend verschiebbar und abdichtend in Eingriff mit der radialen Anschlagfläche (33) steht.

15. Vorrichtung nach Anspruch 12, welche weiterhin elastische Rückführelemente (35) aufweist, die auf die Blöcke (27) einwirken, um sie zu einer geometrischen Achse (X-X) des aufblasbaren Heizbalgs (14) zu drücken.

16. Vorrichtung nach Anspruch 10, bei welcher jedem Verankerungsflansch (15, 16) wenigstens eine Umfangsdichtung zugeordnet ist, die gegen den aufblasbaren Heizbalg (14) in einer radial äußeren Position bezüglich der sich radial verschiebenden Elemente (26) wirkt.

17. Vorrichtung nach Anspruch 10, bei welcher jedem Verankerungsflansch (15, 16) wenigstens eine ringförmige Membran (36) zugeordnet ist, die einen radial inneren Umfangsrand (36a), der abdichtend an dem Verankerungsflansch (11, 16) an einer radial inneren Position bezüglich der sich radial verschiebenden Elemente (26) festgelegt ist, und einen radial äußeren Umfangsrand (36b) aufweist, der an dem Verankerungsflansch (15, 16) in einer radial äußeren Position bezogen auf die sich radial verschiebenden Elemente (26) abdichtend festgelegt ist.

18. Vorrichtung nach Anspruch 10, bei welcher die Verankerungsflansche (15, 16) an einer ersten Welle (17) bzw. an einer zweiten Welle (18) befestigt sind, wobei die Wellen teleskopartig ineinander verschiebbar sind.

19. Vorrichtung nach Anspruch 18, bei welcher die Aufblasvorrichtungen (42, 50) wenigstens eine pneumatische Zuführleitung (43) aufweisen, die in der ersten Welle (17) und der zweiten Welle (18) oder einer von ihnen ausgebildet ist.

20. Vorrichtung nach Anspruch 10, welche weiterhin Einrichtungen (44) zum Steuern und Aufrechterhalten des Aufblasdrucks des aufblasbaren Heizbalgs (14) während des Zusammenfügens der Bauelemente des Reifens (2) auf dem Aufbauträger (9) aufweist.

21. Vorrichtung nach Anspruch 20, bei welcher die Einrichtungen zum Steuern und Aufrechterhalten des Aufblasdrucks (44) einen Drucklufttank (44), der mit dem Aufbauträger (9) in Verbindung steht, und Steuerglieder (47, 48) aufweist, die mit dem Behälter (45) in Verbindung stehen, um den Aufblasdruck des aufblasbaren Heizbalgs (14) auf dem Aufblaszustand eingestellt zu halten.

22. Vorrichtung nach Anspruch 11, bei welcher die Umfangsränder (14a) des aufblasbaren Heizbalgs (14) in einem über-aufgeblasenen Zustand eine elastische Umfangsdehnung von wenigstens 2% zeigen.

23. Vorrichtung nach Anspruch 10, welche weiterhin für eine Anordnung auf jeweils gegenüberliegenden Positionen an äußeren Seitenflächen des aufblasbaren Heizbalgs zwei Ringflansche (37) aufweist, von denen jeder eine starre Anschlagfläche zur Bildung eines Wulstes (5) des in Herstellung befindlichen Reifens (2) bildet.

24. Vorrichtung nach Anspruch 23, bei welcher jeder ringförmige Flansch (37) Umfangssektoren (38, 39) aufweist, die zwischen einer Funktionsstellung, in der sie eine im Wesentlichen radiale Ausrichtung bezüglich einer geometrischen Achse (X-X) des aufblasbaren Heizbalgs (14) haben, und einer Ruhestellung bewegbar sind, in der sie radial eingezogen sind, um ein Lösen des Eingriffs des Reifens (2) von dem Aufbauträger (9) zu ermöglichen.

25. Vorrichtung nach Anspruch 24, bei welcher jeder ringförmige Flansch (37) erste Sektoren (38) und zweite Sektoren (39) aufweist, die am Umfang in einer abwechselnden Folge verteilt sind und in Eingriff mit einer ersten Nabe (40) bzw. einer zweiten Nabe (41) stehen, wobei die Naben bezüglich einander axial bewegbar sind.

26. Vorrichtung nach Anspruch 10, bei welcher die geometrische Gestalt des aufblasbaren Heizbalgs (14) erfassende Elemente mit den Aufblasvorrichtungen (42) zum Unterbrechen der Zuführung von Druckfluid verbunden sind, wenn der aufblasbare Heizbalg (14) vorgegebene Größen erreicht hat.

27. Vorrichtung nach Anspruch 26, bei welcher die Erfassungselemente wenigstens einen Fotoemitter, der einen Lichtstrahl für die Unterbrechung durch den aufblasbaren Heizbalg (14) in einem aufgeblasenen Zustand erzeugt, und einen Fotoempfänger aufweist, der zum Empfangen des Lichtstrahls eingestellt ist.

28. Anlage zur Herstellung von Reifen für Fahrzeugräder
- mit einer Aufbauvorrichtung, die einen Aufbauträger (9) aufweist, der einen aufblasbaren Heizbalg (14) mit Umfangsrändern (14a) hat, die koaxial voneinander beabstandet sind,
- mit Aufblasvorrichtungen (42, 50), die mit dem aufblasbaren Heizbalg (14) verbunden sind, um den Heizbalg in einen aufgeblasenen Zustand zu bringen, so dass er im Wesentlichen eine Torusform hat und die Form seiner Außenfläche in Korrelation zu der Form einer Innenfläche eines herzustellenden Rohreifens (2) steht,
- mit Einrichtungen (10, 11, 12) zum Aufbringen einer Vielzahl von Elementarbauelementen des Rohreifens (2) auf den Aufbauträger (9),
- mit wenigstens einer Form (13) zum Vulkanisieren des Rohreifens (2) und
- mit Einrichtungen (10) zum Überführen des Aufbauträgers (9) in die Vulkanisierform (13),
- wobei die Umfangsränder (14a) des aufblasbaren Heizbalgs (14) radial bewegbar sind, um eine zusätzliche radiale Erweiterung des aufblasbaren Heizbalgs (14) zu begünstigen, die durch die Aufblasvorrichtungen (42, 50) ausgehend von dem aufgeblasenen Zustand aufgebracht wird.

## Revendications

1. Procédé de fabrication de pneus pour roues de véhicule comprenant l'utilisation d'un support de construction (9) comportant une vessie gonflable (14) ayant des bords périphériques (14a) espacés de manière coaxiale et comprenant les étapes consistant à :
- mettre la vessie gonflable (14) dans un état gonflé, de sorte que la forme d'une surface extérieure de celle-ci est en corrélation avec la forme de la surface intérieure d'un pneu cru (2) à fabriquer ;
- appliquer une pluralité de composants élémentaires sur le support de construction (9) afin de construire ledit pneu cru (2) ;
- introduire le pneu cru (2) et le support de construction (9) dans un moule de vulcanisation (13) ;
- faire durcir le pneu cru (2),
dans lequel, pendant la vulcanisation, une étape de surgonflage de la vessie gonflable (14) est exécutée pendant laquelle les bords périphériques (14a) de la vessie gonflable (14) sont soumis à un mouvement orienté radialement vers l'extérieur.

2. Procédé selon la revendication 1, dans lequel pendant la transition entre l'état gonflé et l'état de surgonflage, chaque bord périphérique (14a) de la vessie gonflable (14) est guidé de manière glissante et étanche dans une bride d'ancrage (15, 16) associée audit support de construction (9).

3. Procédé selon la revendication 1, dans lequel l'étape de gonflage est exécutée par admission d'un fluide sous pression dans la vessie gonflable (14), ledit procédé comprenant en outre l'étape consistant à contrôler la configuration géométrique de la vessie gonflable (14).

4. Procédé selon la revendication 3, dans lequel le contrôle de la configuration géométrique de la vessie gonflable (14) est effectué en détectant l'interception d'au moins un faisceau lumineux par la vessie gonflable (14) lorsque cette dernière atteint l'état gonflé.

5. Procédé selon la revendication 1, dans lequel pendant l'étape d'assemblage des composants du pneu (2) sur le support de construction (9), on effectue au moins le contrôle de la pression de gonflage de la vessie gonflable (14).

6. Procédé selon la revendication 1, dans lequel, dans l'étape de surgonflage, les bords périphériques (14a) de la vessie gonflable (14) sont soumis à un allongement élastique dans une direction circonférentielle d'au moins 2 %.

7. Procédé selon la revendication 1, comprenant en outre une étape de dégonflage de la vessie gonflable (14) pour permettre le dégagement du support de construction (9) du pneu vulcanisé.

8. Procédé selon la revendication 1, comprenant en outre l'étape consistant à disposer une paire de rebords de butée annulaires (37) latéralement proches de la vessie gonflable (14), lesdits rebords définissant des sièges de support pour les talons respectifs (5) du pneu (2) en cours de fabrication.

9. Procédé selon la revendication 1, dans lequel l'étape de surgonflage est exécutée en introduisant un fluide de vulcanisation à haute pression et à haute température dans la vessie gonflable (14).

10. Dispositif pour fabriquer des pneus pour roues de véhicule à partir d'une pluralité de composants élémentaires, comprenant :
- un support de construction (9) comprenant une vessie gonflable (14) ayant des bords périphériques (14a) espacés de manière coaxiale ;
- des dispositifs de gonflage (42, 50) associés à la vessie gonflable (14) pour mettre la vessie dans un état gonflé dans lequel elle prend une forme substantiellement toroïdale, la forme d'une surface extérieure de celle-ci étant en corrélation avec la forme d'une surface intérieure d'un pneu cru (2) à fabriquer ;
- ledit support de construction (9) comprenant des brides d'ancrage axialement opposées (15, 16) qui se mettent en contact avec les bords périphériques (14a) de la vessie gonflable (14),
comprenant en outre des éléments glissant radialement (26) associés auxdites brides d'ancrage (15, 16) et se mettant en contact avec les bords périphériques (14a) de la vessie gonflable (14) pour permettre un mouvement radial des bords périphériques (14a) de la vessie gonflable (14).

11. Dispositif selon la revendication 10, comprenant en outre des dispositifs de surgonflage (50) pour la vessie gonflable (14), destinés à être activés pour imposer une expansion radiale supplémentaire à la vessie gonflable (14) en partant de l'état gonflé.

12. Dispositif selon la revendication 10, dans lequel les éléments glissant radialement (26) comprennent, pour chaque bride d'ancrage (15, 16), une pluralité de blocs (27) qui sont répartis sur la circonférence et guidés à coulissement dans une direction sensiblement radiale sur la bride d'ancrage (15, 16) et qui entrent en contact rigide avec le bord périphérique correspondant (14a) de la vessie gonflable (14).

13. Dispositif selon la revendication 12, dans lequel chaque bord périphérique (14a) de la vessie gonflable (14) est enfermé entre lesdits blocs (27) et une surface d'appui radiale (33) définie dans la bride d'ancrage (15, 16).

14. Dispositif selon la revendication 12, dans lequel la vessie gonflable (14) est en contact glissant et étanche avec la surface d'appui radiale (33).

15. Dispositif selon la revendication 12, comprenant en outre des éléments de rappel élastiques (35) agissant sur les blocs (27) pour les pousser vers un axe géométrique (X-X) de la vessie gonflable (14).

16. Dispositif selon la revendication 10, dans lequel au moins un joint périphérique est associé à chaque bride d'ancrage (15, 16), ledit joint agissant contre la vessie gonflable (14) dans une position radialement extérieure par rapport aux éléments glissant radialement (26).

17. Dispositif selon la revendication 10, dans lequel au moins une membrane annulaire (36) est associée à chaque bride d'ancrage (15, 16), ladite membrane ayant un bord périphérique radialement intérieur (36a) fixé de manière étanche à la bride d'ancrage (15, 16) dans une position radialement intérieure par rapport aux éléments glissant radialement (26), et un bord périphérique radialement extérieur (36b) fixé de manière étanche à la bride d'ancrage (15, 16) dans une position radialement extérieure par rapport aux éléments glissant radialement (26).

18. Dispositif selon la revendication 10, dans lequel les brides d'ancrage (15, 16) sont fixées respectivement à un premier axe (17) et à un deuxième axe (18), lesdits axes pouvant glisser de façon télescopique l'un dans l'autre.

19. Dispositif selon la revendication 18, dans lequel les dispositifs de gonflage (42, 50) comprennent au moins un conduit d'admission pneumatique (43) formé dans au moins l'un desdits premier axe (17) et deuxième axe (18).

20. Dispositif selon la revendication 10, comprenant en outre des dispositifs (44) pour le contrôle et le maintien de la pression de gonflage de la vessie gonflable (14) pendant l'assemblage des composants du pneu (2) sur le support de construction (9).

21. Dispositif selon la revendication 20, dans lequel lesdits dispositifs de contrôle et de maintien de la pression de gonflage (44) comprennent un réservoir pneumatique (45) associé au support de construction (9), et des éléments de commande (47, 48) interconnectés avec ledit réservoir (45) pour maintenir la pression de gonflage de la vessie gonflable (14) à l'état gonflé.

22. Dispositif selon la revendication 11, dans lequel les bords périphériques (14a) de la vessie gonflable (14) présentent, dans un état surgonflé, un allongement élastique dans une direction circonférentielle d'au moins 2 %.

23. Dispositif selon la revendication 10, comprenant en outre deux rebords annulaires (37) destinés à être disposés en des positions respectivement opposées, contre les surfaces latérales extérieures de la vessie gonflable (14) et définissant chacun une surface d'appui rigide pour la formation d'un talon (5) du pneu (2) en cours de fabrication.

24. Dispositif selon la revendication 23, dans lequel chaque rebord annulaire (37) comprend des secteurs périphériques (38, 39) mobiles entre une position fonctionnelle dans laquelle ils ont une orientation sensiblement radiale par rapport à un axe géométrique (X-X) de la vessie gonflable (14), et une position de repos dans laquelle ils sont rétractés radialement pour permettre le dégagement du pneu (2) du support de construction (9).

25. Dispositif selon la revendication 24, dans lequel chaque rebord annulaire (37) comprend des premiers secteurs (38) et des deuxièmes secteurs (39) qui sont répartis sur la circonférence en une séquence alternée et en contact respectivement avec un premier moyeu (40) et un deuxième moyeu (41), lesdits moyeux étant mobiles axialement l'un par rapport à l'autre.

26. Dispositif selon la revendication 10, dans lequel des éléments détectant la configuration géométrique de la vessie gonflable (14) sont associés auxdits dispositifs de gonflage (42) pour arrêter l'admission de fluide sous pression lorsque la vessie gonflable (14) a atteint des dimensions prédéterminées.

27. Dispositif selon la revendication 26, dans lequel lesdits éléments de détection comprennent au moins un corps photoémissif produisant un faisceau lumineux devant être intercepté par la vessie gonflable (14) dans un état gonflé et un corps photorécepteur réglé pour recevoir le faisceau lumineux.

28. Installation permettant de fabriquer des pneus pour roues de véhicule comprenant :
- un dispositif de fabrication comportant un support de construction (9) comprenant une vessie gonflable (14) ayant des bords périphériques (14a) espacés de manière coaxiale ;
- des dispositifs de gonflage (42, 50) associés à la vessie gonflable (14) pour mettre la vessie dans un état gonflé dans lequel elle prend une forme substantiellement toroïdale et la forme d'une surface extérieure de celle-ci est en corrélation avec la forme de la surface intérieure d'un pneu cru (2) à fabriquer ;
- des dispositifs (10, 11, 12) pour appliquer une pluralité de composants élémentaires dudit pneu cru (2) sur le support de construction (9);
- au moins un moule (13) pour la vulcanisation du pneu cru (2) ;
- des dispositifs (10) pour transférer le support de construction (9) dans le moule de vulcanisation (13) ;
où les bords périphériques (14a) de la vessie gonflable (14) sont mobiles radialement afin de favoriser une expansion radiale supplémentaire de la vessie gonflable (14) imposée par lesdits dispositifs de gonflage (42, 50) à partir de l'état gonflé.
